Europäisches Patentamt

European Patent Office

Office européen des brevets

(11) Veröffentlichungsnummer: **0 355 306**
**A1**

## (12) EUROPÄISCHE PATENTANMELDUNG

(21) Anmeldenummer: 89111268.2

(22) Anmeldetag: 21.06.89

(51) Int. Cl.⁴: **B60J 7/057 , E05F 15/16 ,**
**E05F 11/50**

(30) Priorität: 21.07.88 DE 3824729

(43) Veröffentlichungstag der Anmeldung:
**28.02.90 Patentblatt 90/09**

(84) Benannte Vertragsstaaten:
**DE FR GB NL SE**

(71) Anmelder: **Webasto AG Fahrzeugtechnik**
**Kraillingerstrasse 5**
**D-8035 Stockdorf(DE)**

(72) Erfinder: **Saleh, Hussam**
**Strassbergerstrasse 8**
**D-8000 München 40(DE)**
Erfinder: **Meiler, Klaus**
**Weilheimerstrasse 24**
**D-8134 Pöcking(DE)**
Erfinder: **Walter, Peter**
**Ahornweg 17**
**D-8130 Starnberg(DE)**
Erfinder: **Meier, Klaus**
**Siedlerstrasse 31**
**D-8071 Oberdolling(DE)**

(54) **Antriebsvorrichtung, insbesondere für Schiebedächer, Schiebe-Hebe-Dächer, Fensterscheiben o.dgl.**

(57) Es wird eine Antriebsvorrichtung (1) angegeben, die insbesondere für Schiebedächer oder dgl. bestimmt ist, und einen Elektromotor (2) aufweist, der über einen Schneckentrieb (4) mit einem Schneckenrad (7) eine Antriebswelle (8) für die Bewegung des Schiebedachs (12) beispielsweise direkt antreibt. Hierbei ist ein Kupplungsstück (15; 15a; 15b; 15c) vorgesehen, das in einer ersten Stellung einen Formschluß zur drehfesten Verbindung von dem Schneckenrad (7) des Schneckentriebs (4) und der Antriebswelle (8) herstellt. In einer zweiten Stellung des Kupplungsstückes (15; 15a; 15b; 15c) ist dieser Formschluß aufgehoben, so daß zur Notbetätigung die Antriebswelle (8) unmittelbar verdreht werden kann, und der Schneckentrieb (4) sowie der Antriebsmotor (2) abgekoppelt sind. Hierdurch erhält man eine vereinfachte und mit geringem Kraftaufwand zu bedienende Notbetätigung im Störfalle der Antriebsvorrichtung (1). Das Kupplungsstück (15; 15a; 15b; 15c) kann Keilteile (16, 16a, 16a´) zur Herstellung der Formschlußverbindung von Schneckenrad (7) und Antriebswelle (8) und Führungsfinger (18) aufweisen, die axial relativ zur Antriebswelle (8) und zum Schneckenrad (7) verschiebbar und in den beiden vorbestimmten Stellungen arretierbar sind. Die Führungs- und Arretierfunktion kann auch in einem Bauteil des Kupplungsstückes (15; 15a; 15b; 15c) zusammen mit der Keilwirkung für die Herstellung der Formschlußverbindung von Schneckenrad (7) und Antriebswelle (8) vereinigt sein.

# Antriebsvorrichtung, insbesondere für Schiebedächer, Schiebe-Hebe-Dächer, Fensterscheiben o.dgl.

Die Erfindung betrifft eine Antriebsvorrichtung, die insbesondere für Schiebedächer, Schiebe-Hebe-Dächer, Fensterscheiben o.dgl. bestimmt ist, wodurch ein geführtes Teil bewegt wird. Eine derartige Antriebsvorrichtung weist einen Elektromotor auf, der über einen Schneckentrieb mit einem Schneckenrad direkt eine Antriebswelle zum Bewegen des geführten Teils, wie eines Schiebedeckels, antreibt. Hierbei ist eine Notbetätigungseinrichtung vorgesehen, mittels der die Antriebswelle und somit das geführte Teil durch Handbetrieb im Notfall verfahrbar ist.

Aus DE-OS 31 33 652 ist ein Antrieb zum Verstellen eines geführten Bauelements, beispielsweise eines Schiebedachs oder eines Schiebefensters bekannt. Der Stellantrieb umfaßt einen Antriebsmotor, ein diesem nachgeordnetes Untersetzungsgetriebe, beispielsweise mit einem Schneckenrad, und eine Kupplung, welche zwischen dem Antriebsmotor und dem Abtriebselement des Stellantriebs angeordnet ist. Die Kupplung hat ein Kupplungsstück, das mit einer Welle des Stellantriebs und mit einem Getriebeglied gleichzeitig in Eingriff oder außer Eingriff bringbar ist. Zum Notbetrieb ist das zu verstellende Glied bei gelöster Kupplung manuell bewegbar. Hierbei · muß das Kupplungsstück mit Hilfe eines Gewindeelements in seine Lösestellung gebracht werden, wozu man spezielle Werkzeuge benötigt.

Ferner ist auch zum manuellen Betätigen im Notbetrieb ein Werkzeug erforderlich. Die Notbetätigung ist daher umständlich und es sind mehrere Handgriffe auszuführen. Auch bedarf es einer speziellen Auslegung der Verbindung zwischen dem Getriebeglied und dem Abtriebselement zur Anordnung des Kupplungsstücks.

Aus der DE-PS 30 30 642 ist eine Antriebsvorrichtung für einen ausstellbaren Schiebedeckel eines Kraftfahrzeugdaches bekannt, bei der zur Notbetätigung an einem vom Antriebsritzel des Schneckentriebs abgewandten Ende der Antriebswelle ein Innensechskant ausgebildet ist, in den zur Notbetätigung ein entsprechend passender Schlüssel eingesetzt werden kann. Die dort gezeigte Antriebsvorrichtung umfaßt eine Getriebeeinrichtung, die ein Zwischenrad enthält, über das das Schneckenrad mit einem getriebeabtriebsseitigen Antriebsritzel antriebsverbunden ist. Dieses Zwischenrad kann zur Notbetätigung ausgerückt werden, so daß die Getriebeeinrichtung und der Elektromotor von der Antriebswelle abgekoppelt sind. Zum Abkoppeln des elektromotorischen Antriebs im Notbetrieb ist daher bei dieser bekannten Auslegung ein Zwischenrad erforderlich, das ein- und ausrückbar ist, so daß es sich hierbei um einen indirekten Antrieb von Elektromotor und Antriebswelle handelt. Das hierbei erforderliche Zwischenrad führt zu einer Verkomplizierung des Aufbaus der Antriebsvorrichtung.

Aus DE-AS 10 68 128 und DE-GM 75 74 129.6 sind ebenfalls elektrische Antriebsvorrichtungen bekannt, bei denen zur Notbetätigung Kupplungseinrichtungen vorgesehen sind, mittels denen ein Antriebsrad, wie ein Schneckenrad, ein- und ausrückbar ist, um im Falle der Notbetätigung die Antriebsverbindung von dem Antriebsmotor abzukoppeln. Ferner gibt es noch weitere Antriebsvorrichtungen, bei denen Rutschkupplungen o.dgl. angeordnet sind, die im Notbetrieb den Antriebsmotor und gegebenenfalls die zugeordnete Getriebeeinrichtung abkoppeln. Hierbei sind aber für den Notbetrieb mehrere Handgriffe vorzunehmen, und insbesondere wird hierdurch die Anzahl der Bauteile einer derartigen Antriebsvorrichtung vergrößert.

Speziell bei Antriebsvorrichtungen der eingangs genannten Art, bei denen ein Elektromotor über einen Schneckentrieb mit einem Schneckenrad direkt eine Antriebswelle antreibt, ergeben sich Schwierigkeiten im Hinblick auf die Notbetätigung dahingehend, daß bei einer direkten Verdrehung der Antriebswelle im Notbetrieb ein relativ hoher Kraftaufwand erforderlich ist, da die Widerstandskräfte vom Elektromotor und dem Schneckentrieb überwunden werden müssen. Wenn Beschädigungen am Schneckentrieb und/oder am elektrischen Antriebsmotor auftreten, so kann es sogar möglich sein, daß man die erforderlichen Kräfte im Notbetrieb kaum mehr aufbringen kann.

Daher besteht ein Bedürfnis nach einer Antriebsvorrichtung, bei der bei einem Direktantrieb in zuverlässiger Weise eine Notbetätigung mit möglichst geringem Kraftaufwand ermöglicht wird.

Die Erfindung zielt daher darauf ab, eine Antriebsvorrichtung, insbesondere für Schiebedächer, Schiebe-Hebe-Dächer, Fensterscheiben o.dgl. bereitzustellen, die bei einem motorischen Direktantrieb auf konstruktiv einfache Weise eine Notbetätigung mit geringem Kraftaufwand ermöglicht. Insbesondere soll eine möglichst geringe Bauhöhe erzielt und eine Verschiebebewegung der Antriebswelle zur Notbetätigung vermieden werden.

Nach der Erfindung zeichnet sich eine Antriebsvorrichtung, insbesondere für Schiebedächer, Schiebe-Hebe-Dächer, Fensterscheiben o.dgl. mit einem Elektromotor, der über einen Schneckentrieb mit einem Schneckenrad direkt eine Antriebswelle zum Bewegen eines geführten Teils, wie eines Schiebedeckels, antreibt, und mit einer Notbetätigungseinrichtung für einen Handbetrieb der Antriebswelle mit einem Kupplungsstück, das in einer ersten Stellung mittels Formschluß das Schneckenrad und die Antriebswelle drehfest verbindet, in einer zweiten Stellung den Formschluß aufhebt und axial zur Antriebswelle zu den Stellungen verschiebbar ist, dadurch aus, daß im Lagerbereich von Schneckenrad und Antriebswelle wenigstens eine Nut vorgesehen ist, in der ein axiales Keilteil des Kupplungsstücks verschiebbar ist.

Bei der erfindungsgemäßen Antriebsvorrichtung wird mit Hilfe des Kupplungsstückes bei dem Direktantrieb die Formschlußverbindung zur drehfesten Verbindung von Schneckenrad und Antriebswelle hergestellt, so daß die Antriebswelle durch den Elektromotor über den Schneckentrieb im Normalbetriebszustand direkt angetrieben werden kann. Im Störfalle jedoch kann das Kupplungsstück in seine zweite Stellung überführt werden, in der der Formschluß aufgehoben ist, so daß die Antriebswelle unter Abkopplung des Antriebsmotors und des Schneckentriebes direkt verdreht und hierdurch zur Notbetätigung das geführte Teil, wie ein Schiebedeckel eines Schiebedachs, bewegt werden kann. Hierdurch wird der Kraftaufwand im Falle der Notbetätigung nennenswert herabgesetzt, da weder die Selbsthemmungsmomente des Antriebsmotors noch die Widerstände des Schneckentriebs überwunden werden müssen. Zugleich wird auch die Zuverlässigkeit der Notbetätigung verbessert, da bei der erfindungsgemäßen Antriebsvorrichtung selbst dann eine Notbetätigung möglich ist, wenn Beschädigungen beim Schneckentrieb und/oder beim Antriebsmotor auftreten, so daß nach der Erfindung eine vom Antriebsmotor und dem Schneckentrieb unabhängige Notbetätigung bereitgestellt wird. Ferner ist das Kupplungsstück axial zur Antriebswelle verschiebbar und kann in die beiden Stellungen gebracht werden, so daß das Kupplungsstück ohne eine nennenswerte Vergrößerung der Bauhöhe der Antriebsvorrichtung angeordnet werden kann. Insbesondere ist im Lagerbereich von Schneckenrad und Antriebswelle wenigstens eine Nut vorgesehen, in der ein axiales Keilteil des Kupplungsstücks verschiebbar ist. Mit Hilfe dieses axialen Keilteils wird in einer der Stellungen des Kupplungsstückes der Formschluß zur drehfesten Verbindung von Schneckenrad und Antriebswelle hergestellt, so daß ein direkter Antrieb durch den Elektromotor möglich ist. Ferner kann in der Antriebswelle wenigstens eine Nut vorgesehen sein, in der ein axial verlaufender Führungsfinger des Kupplungsstückes verschiebbar ist. Mit Hilfe dieses Führungsfingers wird das Kupplungsstück in axialer Richtung geführt und es können die beiden Stellungen des Kupplungsstückes von dem Führungsfinger und der Antriebswelle gebildeten Arretierungen bestimmt werden. Bei einer solchen Auslegung können die Führung und die Arretierung von dem Keilteil des Kupplungsstückes getrennt sein, wobei das Kupplungsstück in regelmäßigen Winkelabständen und in abwechselnder Anordnung auch mehrere Keilteile und Führungs finger aufweisen kann. Für die Arretierung des Kupplungsstücks in den jeweiligen Stellungen können an der An-triebswelle Rastvertiefungen und am Führungsfin-ger hiermit zusammenarbeitende Rastvorsprünge vorgesehen sein. Bei einer derartigen Ausgestaltungsform der Antriebsvorrichtung nach der Erfindung kommt man mit sehr wenigen Änderungen im Vergleich zu den bisherigen direkten Antriebsvorrichtungen im Hinblick auf eine zuverlässige Notbetätigung aus. Auch umfaßt die Antriebsvorrichtung eine möglichst geringe Anzahl von Bauteilen. Die Notbetätigung läßt sich ohne Spezialwerkzeuge vornehmen.

Gemäß einer weiteren vorteilhaften Ausgestaltungsform der Antriebsvorrichtung nach der Erfindung kann an dem Keilteil zugleich ein Einführungsfinger ausgebildet sein, d.h. es werden in ein und demselben Bauteil zwei Funktionen, nämlich die Keilfunktion für die Herstellung der Formschlußverbindung und die Arretierung des Kupplungsstük-kes in den beiden Stellungen vereinigt. Hierdurch vereinfacht sich die Auslegung des Kupplungsstük-kes und zweckmäßigerweise umfaßt das Kupplungsstück in regelmäßigen Winkelabständen drei derartige kombinierte Keil- und Führungsfingerteile.

Zweckmäßigerweise ist die Auslegung des Kupplungsstückes bei der Antriebsvorrichtung nach der Erfindung derart getroffen, daß das Kupplungsstück zuverlässig in der zweiten Stellung, in der der Formschluß von Schneckenrad und Antriebswelle aufgehoben ist, zuverlässig an der Antriebswelle gehalten ist, so daß das Kupplungsstück bei der Notbetätigung nicht verloren gehen kann und im Reparaturfalle nicht ersetzt zu werden braucht.

Nach Behebung des Schadens an der Antriebsvorrichtung braucht dann das Kupplungsstück lediglich wieder in die erste Stellung gebracht zu werden, um den Grundbetriebszustand eines direkten motorischen Antriebs der Antriebswelle wiederherzustellen.

Zur erleichterten Bedienung kann das freie Ende des Kupplungsstückes zweckmäßigerweise als Griffteil ausgebildet sein, so daß man das Kupplungsstück mit den Fingern beispielsweise in die jeweiligen Stellungen bringen kann, und in den jeweiligen Stellungen ein spürbarer Stand durch die jeweils zugeordneten Arretierungen bei der Axialverschiebung des Kupplungsstückes vorhanden ist.

Ferner kann die Auslegung auch so getroffen werden, daß das Kupplungsstück zugleich als Handhabe, beispielsweise in Form eines Handrades, im Notbetrieb, d.h. wenn es sich in seiner zweiten Stellung befindet, genutzt werden kann. In diesem Fall kann die Verwendung eines zusätzlichen Werkzeuges für die Durchführung des Notbetriebs entfallen, so daß sich die Notbetätigung schnell, bequem und einfach mit relativ geringem Kraftaufwand selbst von technisch nicht versierten Personen durchgeführt werden kann.

Bei einer weiteren Ausführungsvariante ist mit dem Kupplungsstück zur Handhabe eine Handkurbel verbunden, die schwenkbar am Basisteil des Kupplungsstücks gelagert ist. In der eingeschwenkten Stellung der Handkurbel, in der sich das Kupplungsstück in der ersten Stellung befindet, d.h. eine Formschlußverbindung von Schneckenrad und Antriebswelle vorhanden ist, liegt die Handkurbel etwa parallel zum Gehäuse der Antriebsvorrichtung. Ausgehend von dieser Grundstellung der Handkurbel wird diese im Falle der Notbetätigung um etwa 90° verschwenkt, wobei das dem Gehäuse zugewandte Ende der Handkurbel, d.h. das von dem Griffteil der Handkurbel gegenüberliegende Ende desselben als Hebelarm ausgebildet ist und sich am Gehäuse als Drehpunkt abstützt. Bei dieser Verschwenkbewegung wird somit das Kupplungsstück in axialer Richtung verschoben und in die zweite Stellung gebracht, in der über das Kupplungsstück lediglich eine Verbindung mit der Antriebswelle unter Abkupplung des Schneckenrads vorhanden ist. In dieser ausgeschwenkten Stellung kann die Handkurbel zur Ausführung der Notbetätigung verwendet werden, so daß mit geringem Kraftaufwand die Antriebswelle mit Hilfe der Handkurbel verdreht werden kann. Zugleich ist auch der Kraftaufwand bei der Ausrückbewegung des Kupplungsstückes gering, da hierfür die Handkurbel eine Hebelübersetzung unter Abstützung am Gehäuse hat.

Obgleich die Erfindung anhand einer Antriebsvorrichtung für ein Schiebedach bzw. ein Schiebe-Hebe-Dach erläutert wird, kann die erfindungsgemäße Auslegung unter Verwendung des Kupplungsstückes auch bei anderen geführten und zu bewegenden Teilen eines Kraftfahrzeuges o.dgl., wie z.B. bei Fensterhebern, verwendet werden, und zwar insbesondere dann, wenn eine direkte Verbindung von Antriebsmotor und Antriebswelle des zu bewegenden Teils vorhanden ist.

Weitere vorteilhafte Ausgestaltungen der Erfindung sind in den Ansprüchen wiedergegeben.

Die Erfindung wird nachstehend anhand von bevorzugten Ausführungsbeispielen unter Bezugnahme auf die beigefügte Zeichnung näher erläutert. Darin zeigt:

Fig.1 eine schematische Darstellung eines Fahrzeugschiebedachs mit in Schließstellung befindlichem Schiebedeckel,

Fig.1a eine Draufsicht auf eine erste Ausführungsform einer Antriebsvorrichtung in Teilschnittdarstellung,

Fig. 2 eine Axialschnittansicht der Antriebsvorrichtung nach Fig. 1, wobei aus Übersichtlichkeitsgründen der Antriebsmotor weggelassen ist,

Fig. 3 eine Schnittansicht einer Ausführungsvariante eines Kupplungsstücks,

Fig. 4 eine Draufsicht auf die Auslegung nach Fig. 3 in Schnittdarstellung,

Fig. 5 eine Ansicht einer weiteren Ausführungsvariante eines Kupplungsstückes unter Zuordnung zu einer entsprechenden Ausbildungsform einer Antriebswelle, und

Fig. 6 eine Axialschnittansicht einer Ausführungsvariante eines Teils einer Antriebsvorrichtung.

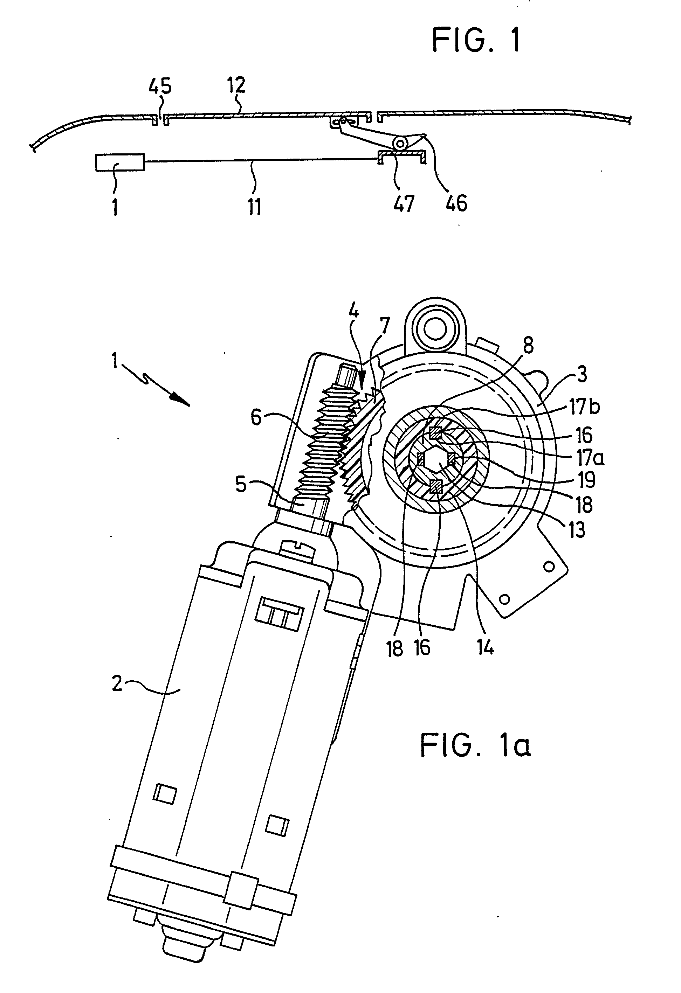

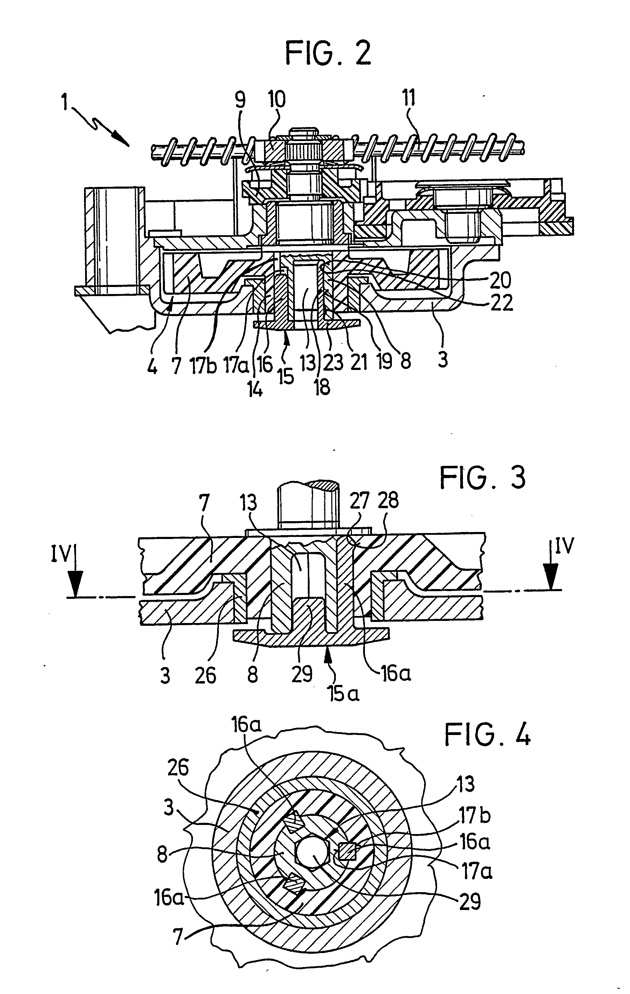

Anhand den Fig.1,1a und 2 wird eine insgesamt mit 1 bezeichnete Antriebsvorrichtung erläutert. Die Antriebsvorrichtung umfaßt als Antriebsmotor einen Elektromotor 2, der an einem Gehäuse 3 angeflanscht ist, in dem ein insgesamt mit 4 bezeichneter Schneckentrieb untergebracht ist. In das Gehäuse 3 ragt eine Abtriebswelle 5 des Elektromotors 2, die eine Schnecke 6 an ihrem Ende trägt. Die Schnecke 6 ist in Kämmeingriff mit einem Schneckenrad 7, das im Gehäuse 3 angeordnet ist und durch das ein Ende einer im Gehäuse 3 drehbeweglich gelagerten Antriebswelle 8 geht. Die Antriebswelle 8 steht in axialer Richtung über das Gehäuse 3 vor und trägt an diesem vorstehenden Ende ein Schaltrad 9 und ein Antriebsritzel 10, das in Kämmeingriff mit einem schematisch dargestellten drucksteifen Gewindekabel 11 steht, das mit einem zu bewegenden Teil, wie einem schematisch dargestellten Schiebedeckel 12 eines Fahrzeugdaches über eine Transportbrücke 47. und ein Hebelglied 46 verbunden ist. Mit Hilfe des Schaltrades 9 kann der Bewegungsablauf bei der Verfahrbewegung des Schiebedeckels 12 beispielsweise gesteuert werden. Da die Funktionsweise des Schaltrads 9 sowie die Einzelheiten der Verbindung von Antriebsritzel 10, drucksteifem Gewindekabel 11 und Schiebedeckel 12 an sich bekannt sind, wird von einer Beschreibung näherer Einzelheiten derselben abgesehen. In Fig.1 ist der Schiebedeckel 12 in seiner eine Dachöffnung 45 verschließenden Stellung, d.h. der sogenannten Grundstellung gezeigt.

An dem Antriebsritzel 10 abgewandten Ende der Antriebswelle 8 ist eine Innensechskantöffnung 13 ausgebildet. In diese Innensechskantöffnung 13 kann ein entsprechend hierzu komplementär ausgebildetes Werkzeug eingesetzt werden, so daß im Notbetrieb die Antriebswelle 8 sowie das damit drehfest verbundene Antriebsritzel 10 direkt von Hand gedreht werden kann.

In den Fig.1a und 2 ist eine erste Ausbildungsform eines insgesamt mit 15 bezeichneten Kupplungsstücks nach der Erfindung für die vorstehend beschriebene Antriebsvorrichtung 1a gezeigt. Dieses Kupplungsstück 15 hat in Verbindung mit Fig.1 zwei diametral gegenüberliegende Keilteile 16, die in entsprechend komplementär ausgebildeten und axial zur Antriebswelle 8 verlaufenden Nuten 17a und 17b in axialer Richtung verschiebbar angeordnet sind. Die Nut 17a ist hierbei an der Antriebswelle 8 und die Nut 17b an der Innenfläche eines Nabenteils 14 des Schneckenrads 7 ausgebildet. Ferner weist das Kupplungsstück 15 zwei etwa diametral gegenüberliegende und in Umfangsrichtung zu den Keilteilen 16 etwa um 90° versetzt angeordnete Führungsfinger 18 auf, die in entsprechend zugeordneten und axial verlaufenden Nuten 19 im inneren Bereich der Antriebswelle 8, beispielsweise im Bereich der Innensechskantöffnung 13 derselben axial beweglich geführt sind. Beim dargestellten Beispiel weisen die Nuten 19 zwei im axialen Abstand liegende Vertiefungen 20 und 21 auf, und das vordere Ende der Führungsfinger 18 trägt jeweils einen Vorsprung 22. Die Vertiefungen 20 und 21 und der Vorsprung 22 bilden im Zusammenwirken zwei axial im Abstand liegende Arretierungen zur Bestimmung von zwei Raststellungen des Kupplungsstücks 15. In Fig. 2 ist das Kupplungsstück 15 in seiner ersten Stellung gezeigt, in der die Vorsprünge 22 an den Führungsfingern 18 in die Vertiefungen 20 an die Antriebswelle 8 eingerastet sind. Die Keilteile 16 sind in dieser ersten Stellung des Kupplungsstückes 15 in die Nuten 17a, 17b im Lagerbereich von Antriebswelle 8 und Schneckenrad 7 eingesetzt, so daß eine formschlüssige Verbindung von Schneckenrad 7 und Antriebswelle 8 vorhanden ist. Hierbei handelt es sich um den normalen Grundbetriebszustand der Antriebsvorrichtung 1, in dem das Antriebsritzel 10 direkt durch den Elektromotor 2 über den Schneckentrieb 4 in die Antriebswelle 8 eingetrieben wird. Zur Notbetätigung wird das Kupplungsstück 15 in eine zweite Stellung überführt, indem es in Fig. 2 in axialer Richtung längs den Nuten 17a, 17b und 19 in Richtung von der Antriebswelle 8 weg derart herausgezogen wird, daß die Vorsprünge 22 der Führungsfinger 18 in die Vertiefung 21 einrasten. Da wie gezeigt die Führungsfinger 18 eine größere axiale Länge als die Keilteile 16 besitzen, ist in dieser schematisch in gebrochener Linie dargestellten zweiten Stellung des Kupplungsstücks 15 der Formschluß der Keilteile 16 mit dem Schneckenrad 7 und der Antriebswelle 8 aufgehoben. Die Keilteile 16 sind in dieser zweiten Stellung des Kupplungsstückes 15 so weit in axialer Richtung abgerückt, daß sie nicht mehr in die Nuten 17a, 17b eingreifen. Das Kupplungsstück 15 ist in dieser zweiten Stellung durch das Zusammenwirken des Vorsprungs 22 mit der Vertiefung 21 der Führungsfinger 18 an der Antriebswelle 8 festgehalten. Wenn in dieser zweiten Stellung in die Innensechskantöffnung 13 ein entsprechendes Werkzeug eingeführt wird, so kann die Antriebswelle 8 direkt mittels Handantrieb verdreht werden, so daß sich auch das Antriebsritzel 10 und die damit zusammenwirkenden Einrichtungen betätigen lassen, wobei die Antriebsverbindung vom Elektromotor 2 über den Schneckentrieb 4 zur Antriebswelle 8 unterbrochen ist, so daß man im Falle der Notbetätigung von Hand lediglich soviel Kraft aufwenden muß, daß der Bewegungswiderstand des Schiebedeckels 12 überwunden wird. Der Schneckentrieb 4 und der Elektromotor 2 sind in dieser zweiten Stellung des Kupplungsstücks 15 abgekoppelt, so daß im Falle der Notbetätigung deren Widerstände keinen Einfluß auf die Betätigungskraft bei der Notbetätigung haben.

Wie gezeigt, ist das Kupplungsstück 15 einteilig ausgebildet und umfaßt ein Basisteil 23, an dem die axial verlaufenden Keilteile 16 und die axial verlaufenden Führungsringe 18 ausgebildet sind.

Wenn die Ursache für die Betriebsstörung bei der Antriebsvorrichtung 1 behoben ist, so braucht lediglich das Kupplungsstück 15 wiederum in die in Fig. 2 in durchgezogener Linie eingetragene erste Stellung überführt zu werden und man erhält eine direkte Antriebsverbindung von Elektromotor 2 und Antriebswelle 8. Somit ist die erfindungsgemäße Antriebsvorrichtung mit Notbetätigungseinrichtung auch wartungsfreundlich ausgelegt, da das Kupplungsstück 15 nicht ausgewechselt zu werden braucht und auch nicht verloren gehen kann, da es in der zweiten Stellung des Kupplungsstückes 15 an der Antriebswelle 8 durch das Zusammenwirken der Vorsprünge 22 und der Vertiefungen 21 sicher gehalten ist.

Anhand den Fig. 3 und 4 wird eine erste Ausführungsvariante eines insgesamt mit 15a bezeichneten Kupplungsstückes erläutert. Nähere Einzelheiten der Antriebsvorrichtung 1, wie Elektromotor 2 u.dgl. sind hierbei nicht gezeigt, da diese im wesentlichen mit den Einzelheiten nach den Fig.1, 1a und 2 übereinstimmen. In Fig. 3 ist lediglich ein Ausschnitt als Axialschnittdarstellung des Lagerbereichs von Schneckenrad 7 und Antriebswelle 8 gezeigt. Das Schneckenrad 7 ist im Gehäuse 3 mittels eines Bundlagers 26 drehbar gelagert. Bei dieser Ausbildungsform weist das Kupplungsstück 15a in Verbindung mit Fig. 4 drei in regelmäßigen Winkelabständen angeordnete und axial verlaufende Keilteile 16a auf, die an ihrem vorderen Ende Vorsprünge 27 besitzen, die in der ersten Stellung des Kupplungsstücks 15a, die in Fig. 3 gezeigt ist, in entsprechende Vertiefungen 28 am Schneckenrad 7 einrasten. Etwa in seiner Mitte weist das Kupplungsstück 15a einen Fortsatz 29 auf, der in der ersten Stellung des Kupplungsstücks 15a in die Innensechskantöffnung 13 passend eingesetzt ist. In dieser in Fig. 3 gezeigten ersten Stellung des Kupplungsstücks 15a sind das Schneckenrad 7 und die Antriebswelle 8 mittels Formschluß durch die Keilteile 16a drehfest verbunden.

Zur Notbetätigung wird das Kupplungsstück 15a in axialer Richtung von der Antriebswelle 8 abgezogen, so daß die Keilteile 16a von den zugeordneten Nuten am Schneckenrad 7 und der Antriebswelle 8 freikommen. Zur Notbetätigung wird dann in die nun ebenfalls freiliegende Innensechskantöffnung 13 ein entsprechendes Werkzeug eingesetzt, so daß die Antriebswelle 8 unter Abkopplung des Elektromotors und des Schneckentriebs (in den Fig. 3 und 4 nicht dargestellt) verdreht werden kann. Bei dieser Ausbildungsform wird das Kupplungsstück 15a vollständig von der Antriebswelle 8 abgelöst und es wird nach beheben der Ursache für den Störzustand des Antriebs wiederum in die in Fig. 3 gezeigte erste Stellung eingesetzt.

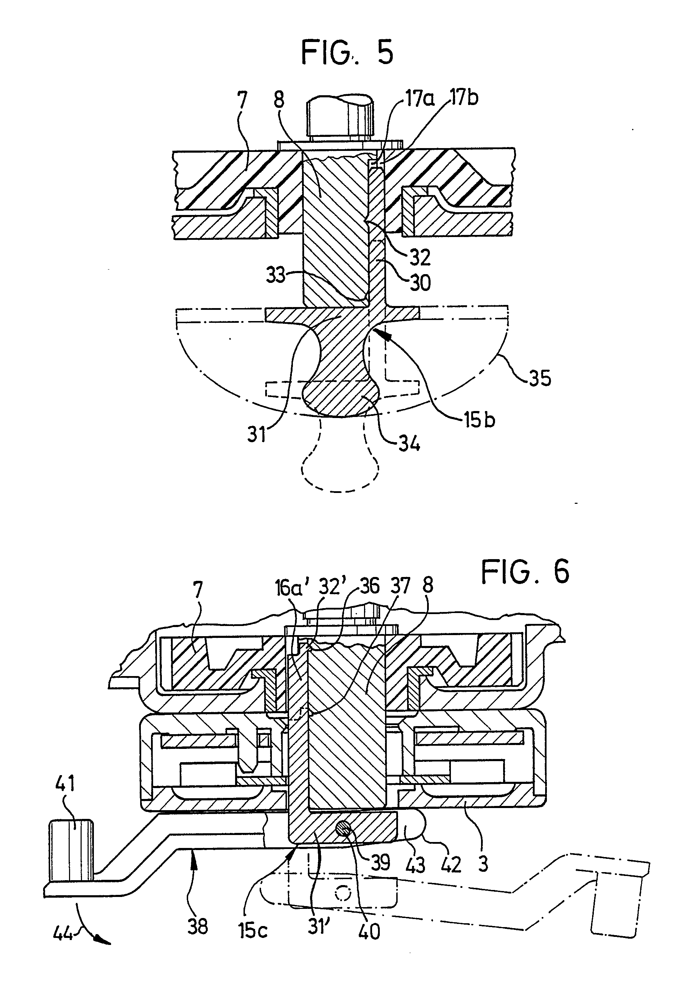

Anhand von Fig. 5 wird eine zweite Ausführungsvariante eines Kupplungsstücks 15b näher erläutert. Bei dem Kupplungsstück 15b sind beispielsweise drei in regelmäßigen Winkelabständen angeordnete und axial zu einem Basisteil 31 vorspringende Teile 30 vorgesehen. Diese vorspringenden Teile 30 dienen zugleich als Keilteile und Führungsfinger gemäß den voranstehend erläuterten Ausführungsbeispielen. Die vorspringenden Teile 30 besitzen in einem Abstand vom Basisteil 31 radial nach innen weisende Vorsprünge 32, die in der zweiten Stellung des Kupplungsstückes 15b, die in gebrochener Linie in Fig.5 dargestellt ist, in eine Umfangsnut 33 der Antriebswelle 8 eingreifen können. In der in Fig. 5 mit durchgezogenen Linien dargestellten ersten Stellung des Kupplungsstückes 15b wirken die vorspringenden Teile 30 als Keilteile und stellen einen Formschluß in Verbindung mit entsprechenden Nuten an der Antriebswelle 8 und dem Schneckenrad 7 her, um das Schneckenrad 7 drehfest mit der Antriebswelle 8 zu verbinden. Zur Notbetätigung wird das Kupplungsstück 15b in die zweite Stellung überführt, in der die Vorsprünge 32 in die Umfangsnut 33 eingreifen und die Formschlußverbindung von Schneckenrad 7 und Antriebswelle 8 aufgehoben ist, wobei das Kupplungsteil 15b fest mit der Antriebswelle 8 verbunden ist und bleibt.

Zur erleichterten Bedienung des Kupplungsstücks 15b ist am Basisteil 31 eine kopfförmige Erhebung ausgebildet, die beispielsweise mit den Fingern ergriffen werden kann, um das Kupplungsstück 15b in axialer Richtung zu bewegen. Wie in gebrochener Linie in Fig. 5 eingetragen ist, kann das Basisteil 31 beispielsweise auch in Form eines Handrades 35 als Betätigungshandhabe ausgebildet sein, so daß für die Ausführung der Notbetätigung die Antriebswelle 8 direkt mit Hilfe des Handrads 35 verdreht werden kann, so daß man zur Durchführung der Notbetätigung kein besonderes Werkzeug benötigt.

In Fig. 6 ist in einer Axialschnittansicht eine Ausführungsvariante einer Antriebsvorrichtung gezeigt, bei der gleiche oder ähnliche Teile, die mit den vorangehenden Ausbildungsformen übereinstimmen, mit den jeweils selben Bezugszeichen versehen sind. Mit 15c ist ein Kupplungsstück bezeichnet, das weitgehend ähnlich dem Kupplungsstück 15, 15a, 15b der vorangehenden Ausbildungsformen ausgelegt ist. Das Kupplungsstück 15c weist wenigstens ein, zweckmäßigerweise drei in regelmäßigen Abständen über den Umfang verteilte Keilteile 16a' auf, von denen in Fig. 6 nur eines zu ersehen ist. Dieses Keilteil 16a' hat an seinem vorderen Ende einen radial nach innen weisenden Vorsprung 32', der bei der dargestellten ersten Stellung des Kupplungsstückes 15c in eine Umfangsnut an der Antriebswelle 8 eingreift. Axial in einem Abstand von der ersten Umfangsnut 36 weist die Antriebswelle eine zweite Umfangsnut 37 auf, durch die die zweite Stellung des Kupplungsstücks 15c bestimmt ist. In dieser zweiten Stellung des Kupplungsstücks 15c ist wie bei den vorangehenden Ausführungsbeispielen der Formschluß zwischen dem Schnekkenrad 7 und der Antriebswelle 8 zur Durchführung der Notbetätigung aufgehoben. Am über das Gehäuse 3 vorstehenden Ende des Kupplungsstückes 15c ist eine insgesamt mit 38 bezeichnete Handkurbel um eine Schwenkachse 39 schwenkbar gelagert, die beispielsweise von einem Bolzen 40 gebildet wird. Dieser Bolzen 40 greift durch die Handkurbel 38 und das mit 31' bezeichnete Basisteil des Kupplungsstücks 15c. Die Handkurbel 38 hat ein mit 41 bezeichnetes Handgriffteil als Betätigungshandhabe und diesem gegenüberliegend ein mit 42 bezeichnetes Ende, das als Hebelarm 43 ausgebildet ist.

In Fig. 6 sind die Handkurbel 38 und das Kupplungsstück 15c in der Grundstellung gezeigt, in der die Antriebsvorrichtung normalerweise unter Verwendung einer elektrischen Antriebseinrichtung arbeitet. Tritt eine Störung beim Antrieb auf, so wird eine Notbetätigung vorgenommen, wozu die Handkurbel 38 in Richtung des Pfeils 44 in Fig. 6 verschwenkt wird. Bei dieser Schwenkbewegung stützt sich der Hebelarm 43 gegen das Gehäuse 3 ab und es wird mit Hebelarmunterstützung das Kupplungsstück 15c in axialer Richtung verschoben, so daß der Vorsprung 32' am Keilteil 16a' in die Umfangsnut 37 der Antriebswelle 8 eingreift. In dieser zweiten Stellung des Kupplungsstücks 15c ist der Formschluß von Schneckenrad 7 und Antriebswelle 8 aufgehoben und es ist lediglich noch eine Formschlußverbindung von Keilteil 16a' des Kupplungsstückes 15c und Antriebswelle 8 vorhanden. In dieser in gebrochener Linie dargestellten ausgeschwenkten Stellung der Handkurbel 38 kann dann die Antriebswelle 8 zur Durchführung des Notbetriebs mit Hilfe der Handkurbel 8 ohne zusätzliches Werkzeug und auf einfache Weise verdreht werden.

Obgleich die kopfförmige Erhebung 34 und/oder das Handrad 35 und/oder die Handkurbel 38 lediglich bei der Ausführungsform des Kupplungsstückes 15b in Fig. 5 oder 15c in Fig. 6 dargestellt ist, können natürlich gleiche oder ähnliche Teile auch bei den zuvor erläuterten Ausbildungsvarianten der Kupplungsstücke 15 und 15a vorgesehen werden.

Obgleich vorangehend vier Ausführungsvarianten der Kupplungsstücke 15, 15a, 15b, 15c gesondert erläutert sind, können gegebenenfalls auch solche Ausbildungsformen gewählt werden, die Kombinationen von jeweiligen Teilen dieser Ausführungsformen umfassen.

Mit der erfindungsgemäßen Vorrichtung werden im wesentlichen folgende Vorteile erzielt:
- Zur Notbetätigung ist ein geringer Kraftaufwand erforderlich, da der Elektromotor 2 und der Schneckentrieb 4 bei der Notbetätigung abgekoppelt sind, so daß deren Widerstände beim Notbetrieb nicht überwunden werden müssen;
- das Kupplungsstück 15, 15a, 15b, 15c läßt sich auch von technisch nicht versierten Personen handhaben, so daß eine einfache und bequeme Bedienungsweise für die Notbetätigung erreicht wird;
- zur Verwirklichung des Erfindungsgedankens wird als zusätzliches Teil lediglich das Kupplungsstück 15, 15a, 15b, 15c benötigt, während alle anderen Teile der Antriebsvorrichtung 1 nur geringfügig geändert zu werden brauchen, wie z.B. das Schneckenrad 7 und die Antriebswelle 8;
- die Notbetätigung bei ausgerücktem Kupplungsstück 15, 15a, 15b, 15c ist unabhängig von der Störungs ursache der Antriebsvorrichtung 1 immer möglich, da selbst bei Beschädigungen und/oder Verbiegungen des Schneckentriebs 4 und dessen Wirkverbindung mit dem Elektromotor 2 eine einfache durchzuführende Notbetätigung möglich ist;
- das Kupplungsstück 15, 15a, 15b, 15c läßt sich auch bei anderen direkt angetriebenen Einrichtungen, wie z.B. Fenstern o.dgl. verwenden, so daß die Notbetätigung von elektrisch betriebenen Einrichtungen am Fahrzeug vereinheitlicht werden kann.

Bezugszeichen

1 Antriebsvorrichtung insgesamt
2 Elektromotor
3 Gehäuse
4 Schneckentrieb insgesamt
5 Abtriebswelle
6 Schnecke
7 Schneckenrad
8 Antriebswelle

9 Schaltrad
10 Antriebsritzel
11 Drucksteifes Gewindekabel
12 Schiebedeckel
13 Innensechskantöffnung
14 Nabenteil von Schneckenrad 7
15 Kupplungsstück in den Fig. 1 und 2
15a Kupplungsstück in den Fig. 3, 4
15b Kupplungsstück in Fig. 5
15c Kupplungsstück in Fig. 6
16, 16a Keilteile
16a' Keilteile in Fig. 6
17a,17b Nuten (17a Nut in Antriebswelle 8)
(17b Nut in Schneckenrad (7)
18 Führungsfinger
19 Nuten für Führungsfinger 18
20 Vertiefungen für Führungsfinger 18
21 Vertiefungen oben für Führungsfinger 18
22 Vorsprung
23 Basisteil von Kupplungsstück 15
26 Bundlager
27 Vorsprung am Keilteil 16a in Fig. 3
28 Vertiefungen am Schneckenrad 7
29 Fortsatz
30 Vorspringende Teile nach Fig. 5
31 Basisteil
31' Basisteil in Fig. 6
32 Vorsprünge (radial)
32' Vorsprung in Fig. 6
33 Umfangsnut
34 Kopfförmige Erhebung
35 Handrad
36 Umfangsnut an Antriebswelle 8
37 Umfangsnut an Antriebswelle 8
38 Handkurbel insgesamt
39 Schwenkachse
40 Bolzen
41 Handgriffteil
42 Ende
43 Hebelarm
44 Pfeil
45 Dachöffnung
46 Hebelglied
47 Transportbrücke

## Ansprüche

1. Antriebsvorrichtung, insbesondere für Schiebedächer, Schiebe-Hebe-Dächer, Fensterscheiben o.dgl., mit einem Elektromotor, der über einen Schneckentrieb mit einem Schnekkenrad direkt eine Antriebswelle zur Bewegung eines geführten Teils, wie eines Schiebedeckels, antreibt, und mit einer Notbetätigungseinrichtung für einen Handantrieb der Antriebswelle mit einem Kupplungsstück, das in einer ersten Stellung mittels Formschluß das Schneckenrad und die Antriebswelle drehfest verbindet, in einer zweiten Stellung den Formschluß aufhebt und axial zur Antriebswelle zu den Stellungen verschiebbar ist, dadurch **gekennzeichnet,** daß im Lagerbereich von Schneckenrad (7) und Antriebswelle (8) wenigstens eine Nut (17a, 17b; 36, 37) vorgesehen ist, in der ein axialer Keilteil (16, 16a, 16a') des Kupplungsstücks (15, 15a, 15b, 15c) verschiebbar ist.

2. Antriebsvorrichtung nach Anspruch 1, dadurch gekennzeichnet, daß in der Antriebswelle (8) wenigstens eine Nut (19) vorgesehen ist, in der ein axial verlaufender Führungsfinger (18, 30) des Kupplungsstücks (15, 15a, 15b) verschiebbar ist.

3. Antriebsvorrichtung nach Anspruch 1 und 2, dadurch gekennzeichnet, daß das Keilteil (30) zugleich als Führungsfinger ausgebildet ist.

4. Antriebsvorrichtung nach Anspruch 2 oder 3, dadurch gekennzeichnet, daß die beiden Stellungen des Kupplungsstücks (15, 15a, 15b, 15c) durch von Führungsfinger (18, 30) und Antriebswelle (8) gebildeten Arretierungen (19, 20, 21, 22, 27, 28, 32, 33) bestimmt sind.

5. Antriebsvorrichtung nach Anspruch 3 oder 4, dadurch gekennzeichnet, daß unter Zuordnung zu den beiden Stellungen an der Antriebswelle (8) Rastvertiefungen (20, 21, 33, 36, 37) und am Führungsfinger (18, 30) ein hiermit zusammenarbeitender Rastvorsprung (22, 32, 32') vorgesehen sind.

6. Antriebsvorrichtung nach einem der Ansprüche 2 bis 5, dadurch gekennzeichnet, daß das Keilteil (16) des Kupplungsstücks (15) eine kürzere axiale Länge als der Führungsfinger (18) derart hat, daß in der zweiten Stellung des Kupplungsstückes (15) das Keilteil (16) aus der zugeordneten Nut (17a, 17b) ausgerückt ist, und der Führungsfinger (18) das Kupplungsstück (15) an der Antriebswelle (8) hält.

7. Antriebsvorrichtung nach einem der Ansprüche 1 bis 6, dadurch gekennzeichnet, daß etwa diametral gegenüberliegend am Kupplungsstück wenigstens zwei Keilteile (16) vorgesehen sind, die in entsprechende Nuten (17a, 17b) eingreifen.

8. Antriebsvorrichtung nach einem der Ansprüche 2 bis 7, dadurch gekennzeichnet, daß etwa diametral gegenüberliegend am Kupplungsstück (15) zwei Führungsfinger (18) vorgesehen sind, die in entsprechende Nuten (19) an der Antriebswelle (18) eingreifen.

9. Antriebsvorrichtung nach einem der vorangehenden Ansprüche, dadurch gekennzeichnet, daß das freie Ende des Kupplungsstücks (15b) als Fingergriffstück (34) ausgebildet ist.

10. Antriebsvorrichtung nach einem der vorangehenden Ansprüche, dadurch gekennzeichnet, daß das freie Ende des Kupplungsstücks (15b) als Handrad (35) zur Notbetätigung ausgebildet ist.

11. Antriebsvorrichtung nach einem der Ansprüche 1 bis 10, dadurch gekennzeichnet, daß das oder die Keilteile (16, 16a) und/oder die Finger (18, 30) an einem Basisteil (23, 31) angeformt sind.

12. Antriebsvorrichtung nach einem der Ansprüche 1 bis 8 oder 11, dadurch gekennzeichnet, daß mit dem Kupplungsstück (15c) eine Handkurbel (38) derart schwenkbar verbunden ist, daß in der eingeschwenkten Stellung der Handkurbel (38) das Kupplungsstück (15c) in Formschlußeingriff ist, und beim Verschwenken derselben um etwa 90° das Kupplungsstück (15c) in der zweiten Stellung ist, wobei die Antriebswelle (8) in dieser zweiten Stellung mittels der Handkurbel (38) zur Notbetätigung verdrehbar ist.

13. Antriebsvorrichtung nach Anspruch 12, dadurch gekennzeichnet, daß das über die Schwenkachse (39) überstehende und dem Handgriffteil (41) gegenüberliegende Ende (42) der Handkurbel (38) als Hebelarm (43) für die axiale Verschiebebewegung des Kupplungsstückes (15c) ausgebildet ist.

FIG. 1

FIG. 1a

# FIG. 2

# FIG. 3

# FIG. 4

## FIG. 5

## FIG. 6

**Europäisches Patentamt**

# EUROPÄISCHER RECHERCHENBERICHT

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| Y,D | DE-A-3 133 652 (ROBERT BOSCH) <br> * Ansprüche 1-7; Seite 7, Zeilen 16-26; Figur 1 * <br> --- | 1-5,7-9,11 | B 60 J 7/057 <br> E 05 F 15/16 <br> E 05 F 11/50 |
| Y | GB-A-1 103 366 (WARN MANUFACTURING CO.) <br> * Anspruch 1; Figuren 1-3; Seite 1, Zeilen 26-31 * <br> --- | 1-5,7-9,11 | |
| A | DE-A-3 200 289 (GILES et al.) <br> * Ansprüche 1,3,4,5; Figuren 1,3,4 * <br> ----- | 12,13 | |

RECHERCHIERTE SACHGEBIETE (Int. Cl.5)

B 60 J 7
E 05 F 11
E 05 F 15
F 16 H 57
F 16 D 11

Der vorliegende Recherchenbericht wurde für alle Patentansprüche erstellt

| Recherchenort | Abschlußdatum der Recherche | Prüfer |
|---|---|---|
| DEN HAAG | 07-11-1989 | GUILLAUME G.E.P. |